# EUROPEAN PATENT SPECIFICATION

(11) **EP 4 415 208 B1**
(45) Date of publication and mention of the grant of the patent: **10.06.2026**
(21) Application number: 23771016.5
(22) Date of filing: 06.03.2023
(51) Int. Cl.: H02J 7/00, H02J 7/90, H01M 10/42, H01M 10/44, H01M 10/48, H02J 7/40, H02J 7/82

(54) **BATTERY PACK, AND APPARATUS AND METHOD FOR MANAGING SAME**
BATTERIEPACK SOWIE VORRICHTUNG UND VERFAHREN ZUR VERWALTUNG DAVON
BLOC-BATTERIE, APPAREIL ET SON PROCÉDÉ DE GESTION

(30) Priority: 14.03.2022 KR 20220031618
(43) Date of publication of application: 14.08.2024
(73) Proprietor: LG Energy Solution, Ltd., Seoul 07335 (KR)
(72) Inventor: KIM, Young Joong, Daejeon 34122 (KR)
(74) Representative: Goddar, Heinz J.
(86) International application number: PCT/KR2023/003035
(87) International publication number: WO 2023/177137

(56) References cited:
- EP-A1- 3 951 999
- EP-B1- 3 594 705
- JP-B2- 4 645 566
- KR-A- 20140 086 080
- KR-A- 20190 067 992
- KR-A- 20210 104 211
- KR-A- 20210 104 211
- KR-A- 20210 143 864
- US-A1- 2017 328 956
- US-A1- 2021 311 129

## Description

### [Technical Field]

The inventive concept relates to a battery pack and a management apparatus thereof, and more particularly, to a battery pack capable of wireless communication and a battery pack management apparatus and method for remotely managing the battery pack using wireless communication.

### [Background Art]

A rechargeable battery capable of charging and discharging, that is, a battery, is widely used as an energy source for mobile devices such as smartphones. In addition, batteries are also used as an energy source for eco-friendly vehicles such as electric vehicles and hybrid electric vehicles, which are proposed as a solution to air pollution caused by gasoline vehicles and diesel vehicles using fossil fuels. The types of applications using batteries are becoming very diverse, and it is expected that batteries will be applied to more fields and products than now.

Such a battery is generally used in the form of a battery pack rather than being used as a single battery cell. A battery pack includes at least one battery module, and the battery module may include a plurality of battery cells. In addition, the battery includes a Battery Management System (BMS) that manages overall states of battery cells, battery modules, or battery packs.

Meanwhile, when the battery pack is not used for a long period of time, it is necessary to manage the battery pack according to the situation in which the battery pack is placed. That is, when the battery pack is stored for a long period of time, transported, or disposed of, it is necessary to lower the state of charge (SOC) of the battery pack according to the situation. For example, when a battery pack is stored for a long time under a full charge condition after shipment, problems such as damage to the battery pack may occur, so it is desirable to manage the SOC at a low level. That is, if the battery pack is stored in a full charge state for a long period of time or stored at a high temperature, many problems such as leakage of electrolyte of the battery pack and possibility of explosion may occur. In addition, in the case of applications used in various external environments other than indoors, there is always a risk during long-term storage. Therefore, the lifespan of the battery is shortened, and the battery is replaced before such a problem occurs. As a result, the replacement cycle of the battery is shortened, resulting in a problem in that maintenance costs are high.

However, in order to manage SOC of existing battery packs, it is common for a user to individually connect a measuring device to each individual battery pack to measure a voltage and convert the voltage into an SOC suitable for the battery pack. However, this conventional method is very cumbersome to check the SOC of each battery pack, and even if the SOC is lowered according to the purpose, it takes a very long time to discharge each battery pack by connecting it to the system.

KR 20210104211 A discloses a management system for a battery pack using HPPC, which is installed in a moving means to supply power to the moving means, comprising: at least one battery pack including a battery cell, and an output control module installed in each of the battery cells to control the output power of the battery cells; a cooling unit installed in the battery pack to cool the battery pack; a sub control module installed in the battery pack to measure the state information of the battery cells, transmit the state information of the battery cells through a wireless communication network, and control the output control module according to an input control signal; and a main control module which receives status information of the battery cells from the sub control module using a wireless communication network and transmits a control signal for controlling output power of the battery cells to the sub control module. The management system for a battery pack using an HPPC is easy to maintain because the sub control module and the main control module transmit and receive status information or control signals through wireless communication, so wiring parts such as cables and connectors are not required, and there is a relatively low space constraint in arranging devices such as battery cells. Since the SoC information for a corresponding battery cell is calculated using the high-performance pulse characterization (HPPC) method, the state of the battery cell can be more accurately identified.

EP 3 951 999 A1 discloses a storage for used battery units capable of economically storing a plurality of used battery units of various manufacturers while suppressing the deterioration of the used battery units during storage. The storage for used battery units includes: a selection unit that selects a discharge target battery unit and a charge target battery unit from among the plurality of used battery units on the basis of the current values and the voltage values of the plurality of used battery units in storage and the predetermined SOC range of each of the plurality of used battery units; and a charge/discharge control unit which causes a discharge target battery unit to be discharged and charges the discharged power into a charge target battery unit such that the SOCs of the discharge target battery unit and the charge target battery unit reach a predetermined SOC range.

JP 4 645566 B2 provides a capacity adjustment device for an electric vehicle capable of enhancing capacity adjustment capability, in the capacity adjustment device equipped with capacity adjustment resistors of a fixed resistance value. The capacity adjustment device is applicable for the electric vehicle provided with the capacity adjustment resistance of the fixed resistance value for every cell comprising a battery module, in which a CPU sets a battery module target SOC during capacity adjustment higher than that during non-capacity adjustment. Thereby, the control range of the SOC of the battery module is shifted to a higher SOC side, causing the cell voltage during the capacity adjustment to be increased higher than usual.

### [Disclosure]

### [Technical Problem]

The inventive concept provides a battery pack according to claim 1.

The inventive concept provides a battery pack management apparatus according to claim 8.

The inventive concept provides a battery pack management management method method for automatically controlling the battery pack in a suitable state according to claim 12.

### [Technical Solution]

The invention is defined by the independent claims. Advantageous embodiments are subject to the dependent claims.

A battery pack according to an embodiment of the inventive concept includes: a battery including a plurality of chargeable and dischargeable battery cells; a communication unit configured to transmit an initial SOC of the battery to an external device and receive a target SOC from the external device; an SOC estimation unit configured to estimate an SOC of the battery; a control unit configured to output an SOC adjustment signal for adjusting an SOC of a battery according to the target SOC; and an SOC adjustment unit configure to adjust the SOC of the battery according to the SOC adjustment signal.

The battery pack is introduced into a predetermined location according to a predetermined condition and wake up according to a wake-up signal from the external device.

The wake-up signal is input at a predetermined cycle.

The target SOC is input differently according to a battery pack operation status such as long-term storage, transportation or disposal of the battery pack.

The control unit compares the SOC estimated by the SOC estimation unit and the target SOC of the battery to output the SOC adjustment signal.

The SOC adjustment unit includes a switch connected to the battery and a discharge resistor connected to the switch, wherein the switch is driven according to the SOC adjustment signal to allow the battery to be discharged through the discharge resistor so that the SOC of the battery is lower than the target SOC.

The discharge resistor includes a variable resistance, and the control unit varies a resistance of the discharge resistor to control a temperature of the battery pack.

A battery pack management apparatus according to another embodiment of the inventive concept includes: at least one according to an embodiment of the invention disclosed herein; and a remote managing device spaced apart from the at least one battery pack and configured to manage the at least one battery pack using communication, wherein the remote managing device sets a target SOC to transmit the set target SOC to the battery pack, and the battery pack adjusts a pack SOC according to the target SOC.

The battery pack is introduced into a predetermined location according to a predetermined condition and wakes up according to a wake-up signal from the remote managing device.

The target SOC is different depending on long-term storage, transportation or disposal of the battery pack.

The battery pack includes: a battery including a plurality of chargeable and dischargeable battery cells; a first communication unit configured to transmit an initial SOC of the battery to the remote managing device and receive the target SOC from the remote managing device; an SOC estimation unit configured to estimate the SOC of the battery pack; a control unit configured to adjust the SOC of the battery according to a comparison result of the target SOC and the pack SOC; and an SOC adjustment unit configured to adjust the SOC of the battery according to a control of the control unit.

The control unit outputs a control signal for adjusting the pack SOC when the pack SOC is larger than the target SOC.

The SOC adjustment unit includes a switch connected to the battery and a discharge resistor connected to the switch, wherein the switch is driven according to a control signal of the control unit and discharges the battery through the discharge resistor.

The discharge resistor includes a variable resistance, and the battery is discharged so that the pack SOC is lower than the target SOC.

The remote managing device includes: a second communication unit configured to transmit a wake-up signal and a target SOC to the battery pack and receive an initial SOC from the battery pack; and a management unit configured to generate the wake-up signal and the target SOC and manage the battery pack through the second communication unit.

The battery pack management apparatus further includes a battery rack configured to accommodate at least one battery pack and communicate with a battery pack through wireless communication or wired communication.

The remote manage unit manages the at least one battery pack accommodated in the battery rack through the battery rack.

A battery pack management method according to another embodiment of the inventive concept includes: a process of introducing at least one battery pack to a predetermined location, for example, a storage warehouse, a container, or a storage yard, specific place, depending on a predetermined condition of the battery pack (, for example, for long-term storage, transportation or disposal; a process of waking up as the battery pack by inputting a wake-up signal into the battery pack; a process of estimating a pack SOC of the battery pack; a process of receiving a target SOC for the battery pack from a remote managing device; a process of comparing the pack SOC and the target SOC; a process of transmitting a signal to a remote managing device indicating that the battery pack discharging is completed if the pack SOC of the battery pack is lower than the target SOC for the battery pack based on a comparison result; and a process of adjusting the pack SOC by discharging the battery pack through a discharge resistor if the pack SOC is higher than the target SOC based on the comparison result.

The battery pack management method further includes: a process of measuring a discharge current while adjusting the pack SOC and comparing the measured discharge current with a reference current; and a process of adjusting an SOC by increasing a resistance value of a discharge resistor if the discharge current is higher than the reference current.

### [Advantageous Effects]

The battery pack according to the inventive concept includes a communication unit to adjust the SOC of the battery pack according to a control signal from an external remote managing device. That is, at least one battery pack of the inventive concept is capable of communication and is located in a predetermined location according to specific circumstances such as transportation, storage, or disposal, and adjusts the SOC of the battery pack according to the predetermined condition according to the control signal from the remote managing device. Therefore, according to the inventive concept, when transporting, storing, or disposing of a battery pack, the battery pack may be automatically controlled in a suitable state through a wireless control signal provided in the environment just by placing the battery pack in a corresponding place. That is, since the plurality of battery packs may be discharged at once without discharging by connecting each battery pack to the system in order to check the SOC of each of the plurality of battery packs, the time for controlling the SOC of the battery packs may be reduced.

### [Description of Drawings]

FIG. 1 is a block diagram illustrating a battery pack management apparatus according to an embodiment of the inventive concept.
FIG. 2 is a block diagram illustrating a battery pack and a remote managing device constituting a battery pack management apparatus according to an embodiment of the inventive concept.
FIG. 3 is a block diagram for explaining a battery pack management apparatus according to another embodiment of the inventive concept.
FIG. 4 is a flowchart illustrating a battery pack management method using a battery pack management apparatus according to an embodiment of the inventive concept.

### [Mode for Invention]

Hereinafter, exemplary embodiments of the inventive concept will be described in detail with reference to the accompanying drawings. However, the inventive concept is not limited to the embodiments disclosed below, but will be implemented in various different forms, and these embodiments are provided to complete the disclosure of the inventive concept, and to fully inform a person of ordinary skill in the scope of the invention. In the drawing, the thickness is enlarged and expressed in order to clearly express the various layers and each region, and the same symbols refer to the same elements in the drawings.

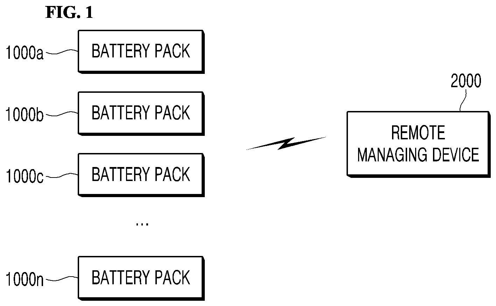

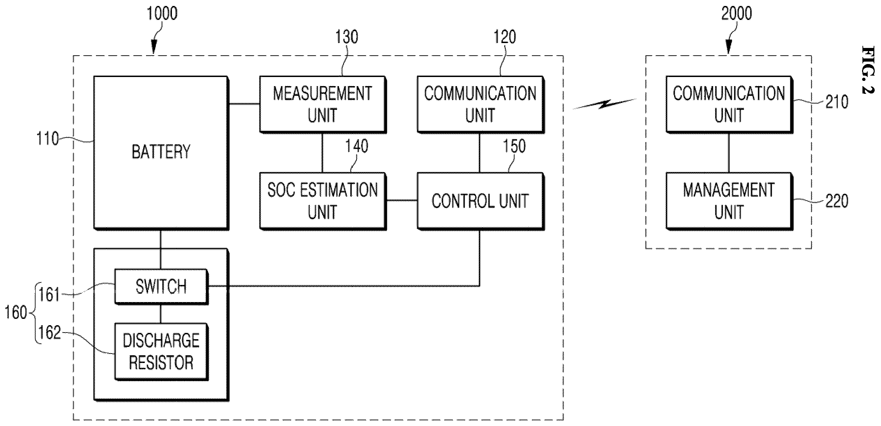

FIG. 1 is a block diagram for explaining a battery pack management apparatus according to an embodiment of the inventive concept, and FIG. 2 is a block diagram illustrating a battery pack and a remote managing device constituting a battery pack management apparatus according to an embodiment of the inventive concept.

Referring to FIGS. 1 and 2, the battery pack management apparatus according to an embodiment of the inventive concept may include at least one battery pack 1000a to 1000n; 1000, and a remote managing device 2000 that is spaced apart from the at least one battery pack 1000 and manages the at least one battery pack 1000 using wireless communication. Here, at least one battery pack 1000 may be formed in plurality, preferably two or more, and at least one remote managing device 2000 may be provided, for example, one each in a predetermined range of a predetermined location. Hereinafter, a plurality of battery packs 1000 and one remote managing device 2000 will be described. That is, the plurality of battery packs 1000 are introduced and located in a predetermined location according to specific circumstances such as long-term storage, transportation, and disposal. For example, a plurality of battery packs 1000 may be located in a predetermined place (for example, a storage warehouse) for long-term storage, may be located in a predetermined space (for example, a container) for transportation, and may be located in a predetermined space (for example, a storage yard or warehouse) for disposal. In this case, each of the plurality of battery packs 1000 may be capable of wireless communication. In addition, the remote managing device 2000 may be provided in a predetermined location according to a predetermined condition and control a plurality of battery packs 1000 located in the corresponding situation or place. At this time, the remote managing device 2000 may remotely control the plurality of battery packs 1000 through wireless communication. That is, the remote managing device 2000 may wirelessly control the plurality of battery packs 1000 located in a storage warehouse for long-term storage, accommodated in a container for transportation, or stored in an open yard for disposal. At this time, the remote managing device 2000 may control the SOC of the battery pack 1000 to be adjusted to a predetermined condition, etc., remotely, that is, separated from the plurality of battery packs 1000 by a predetermined distance and using wireless communication. That is, the battery pack 1000 must have a charge amount below a predetermined level, that is, SOC, in predetermined conditions such as long-term storage, transportation, and disposal, and to this end, the inventive concept remotely controls the battery pack 1000 so that the remote managing device 2000 has an SOC suitable for a corresponding situation. A battery pack management apparatus according to an embodiment of the inventive concept including at least one battery pack 1000 and at least one remote managing device 2000 will be described in detail for each component as follows.

### 1. Battery Pack

The battery pack 1000 may include a battery 110 including a plurality of chargeable and dischargeable battery cells, a communication unit 120 for communication with a remote managing device 2000, a measurement unit 130 for measuring the state of the battery 110, an SOC estimation unit 140 for estimating the SOC of the battery 110 using measurement data through the measurement unit 130, a control unit 150 for controlling the SOC of the battery 110 according to the estimation result of the SOC estimation unit 140 and the control signal according to the environment setting value of the external remote managing device 2000, and an SOC adjustment unit 160 for adjusting the SOC of the battery 110 according to the control signal of the control unit 150. Meanwhile, the battery pack 1000 is mounted on a predetermined electric/electronic device during normal operation and provides electric energy required for driving the electric/electronic device. That is, the battery pack 1000 may be charged and discharged to provide electrical energy to electrical and electronic devices during normal operation, and discharged to adjust the SOC under the control of the remote managing device 2000 in a predetermined condition during long-term storage, transportation or disposal. For general operation of the battery pack 1000, a charge/discharge switch (not shown) controlled by the control unit 150 may be provided. However, since the inventive concept describes the battery pack 1000 during long-term storage, transportation, or disposal, configuration during general operation is not mentioned.

The communication unit 120, the measurement unit 130, the SOC estimation unit 140, and the control unit 150 may be integrated as components constituting a battery pack management device (Pack BMS).

### 1.1. Battery

The battery 110 may be charged and discharged to provide energy necessary for driving electric and electronic devices. That is, the battery 110 may be charged and store electrical energy of a predetermined capacity and discharged to provide electrical energy for operation of the electric/electronic device. The battery 110 may include at least one battery pack, and the battery pack may include a plurality of battery modules. In addition, the battery module may include a plurality of battery cells capable of charging and discharging. That is, the battery 110 includes a plurality of battery cells, a plurality of battery cells may be bundled into a predetermined unit to form a battery module, and a plurality of battery modules may form one battery pack. Meanwhile, a plurality of battery cells may be connected in series and/or in parallel in various ways to meet the specifications of an electric/electronic device. Of course, a plurality of battery modules or battery packs each including a plurality of battery cells may also be connected in series and/or parallel. Here, the type of battery cell is not particularly limited, and may include, for example, a lithium ion battery, a lithium polymer battery, a nickel cadmium battery, a nickel hydride battery, a nickel zinc battery, and the like.

### 1.2. Communication Unit

The communication unit 120 may be provided for communication between the battery pack 1000 and the remote managing device 2000. The communication unit 120 receives a predetermined signal from the remote managing device 2000 and transmits the received predetermined signal to the control unit 150. At this time, the signal supplied from the remote managing device 2000 through the communication unit 120 may include environment setting values, and the environment setting value may include a target SOC for managing the SOC of a battery pack according to a predetermined condition and a predetermined location. That is, the target SOC may be different according to long-term storage, transportation, or disposal of the battery pack 1000, and the communication unit 120 may receive a target SOC signal according to the situation from the remote managing device 2000. The environment setting value including the target SOC according to the predetermined condition and place may be supplied to the control unit 150 through the communication unit 120 as a predetermined signal. Also, a wakeup signal may be input from the remote managing device 2000 through the communication unit 120. According to the wake-up signal input through the communication unit 120, the control unit 150 in the IDLE state wakes up and then receives the SOC setting signal through the communication unit 120, so that the control unit 150 may adjust the SOC of the battery pack 1000 to suit a predetermined condition and a specific location. In this case, the wake-up signal may be received through the communication unit 120 from the remote management unit 2000 at predetermined intervals. Accordingly, the battery pack 1000 may be woken up at predetermined cycles. Also, the communication unit 120 may transmit the SOC estimation value of the battery pack 1000 to the remote managing device 2000. That is, the communication unit 120 may transmit the estimated initial SOC to the remote managing device 2000 after the battery pack 1000 wakes up. The communication unit 120 may be a communication module of various types, and for example, a wireless communication module such as Bluetooth or Zigbee may be used.

### 1.3. Measurement Unit

The measurement unit 130 may be provided to measure the state of the battery 110. The measurement unit 130 measures states such as voltage, current, and temperature of the battery 110. To this end, the measurement unit 130 may include a voltage sensor for measuring voltage, a current sensor for measuring current, and a temperature sensor for measuring temperature. At this time, the measurement unit 130 may measure states such as current and voltage of the battery module and battery cell. That is, the state of each of a plurality of battery cells may be measured, or the state of a battery module in which a plurality of battery cells are bundled may be measured. To this end, the measurement unit 130 may include a plurality of sensors. That is, at least one voltage sensor, at least one current sensor, and at least one temperature sensor may be included. The voltage sensor, current sensor, and temperature sensor periodically measure voltage, current, and temperature of the battery 110 and provide measurement results to the SOC estimation unit 140. The measurement result may be provided to the SOC estimation unit 140 as an analog signal or a digital signal. The voltage sensor measures the voltage applied between the positive and negative electrodes of the battery 110 and provides the measured voltage to the SOC estimation unit 140. As an example, the voltage sensor may include a differential amplifier circuit outputting a voltage signal corresponding to a voltage difference between the positive and negative terminals of the battery 110. Here, the voltage sensor may measure the AC voltage. In addition, the current sensor is a sense resistor or a Hall sensor, and generates a signal corresponding to the magnitude of the charging current and provides the generated signal to the SOC estimation unit 140. The current sensor may measure not only the charging current but also the magnitude of the discharging current. Here, the current sensor may measure an alternating current. Also, the temperature sensor may be, for example, a thermal coupler used for temperature measurement. The temperature sensor generates a signal corresponding to the temperature of the battery 110 and provides the generated signal to the SOC estimation unit 140.

### 1.4. SOC Estimation Unit

The SOC estimation unit 140 estimates the SOC of the battery 110. There may be various methods for estimating SOC. As a first method, the SOC of the battery 110 may be estimated using the capacity of the battery 110 estimated from the SOH estimation unit (not shown) and the current of the battery 110 measured and averaged from the measurement unit 130. That is, the SOC estimation unit 140 may estimate the SOC of the battery 110 by integrating the calculated average current value for a predetermined time and dividing it by the battery capacity estimated from the SOH estimation unit. As a second method, the SOC estimation unit 140 may estimate the SOC using the open circuit voltage (OCV) of the battery 110. That is, the SOC may be estimated by extracting the SOC matched with the OCV measured by the measurement unit 130 by referring to the initial OCV table. For example, if the OCV measured from the measurement unit 130 is 3560 mV, it may be estimated that the SOC is 40% by referring to the OCV table. In this case, the SOC may be estimated by estimating the initial SOC estimated by OCV and measuring the discharge current. As a third method, the SOC estimation unit 140 may estimate the SOC by measuring the impedance of the battery 110. As a fourth method, the SOC estimation unit 140 estimates the SOC of each battery 110 using measurement data after charging and discharging the battery 110. For example, the SOC estimation unit 140 calculates a first SOC after discharging when battery discharge occurs, and calculates a second SOC after charging when charging continues after discharging. Also, when re-discharging continues after charging, the third SOC is calculated after re-discharging. Then, these operations are repeatedly performed. In this case, the SOC estimation unit 140 may estimate the SOC of the battery using voltage, current, and temperature measurement value information based on a Kalman filter or an extended Kalman filter. That is, the SOC estimation unit 140 models the battery's OCV, internal resistance, and resistance-capacitor parallel circuit as an equivalent circuit connected in series, estimates the SOC using a linear or non-linear function and a current integration method using the factors of the equivalent circuit model as variables, and corrects the estimated SOC using the sensing data generated in real time by the measurement unit 130 and the calculated average voltage and current, so that the SOC for the battery may be estimated.

### 1.5. Control Unit

The control unit 150 may generate a control signal for managing and controlling the battery 110 according to a result of estimating the state of the battery 110 according to the SOC estimation unit 140. At this time, the control unit 150 manages the battery 110 according to the target SOC supplied from the external remote managing device 2000 through the communication unit 120. That is, the control unit 150 receives the SOC estimation value of the battery 110, that is, the pack SOC, from the SOC estimation unit 140, receives the target SOC from the remote managing device 2000 through the communication unit 120, and compares the pack SOC with the target SOC. As a result of the comparison, if the target SOC is higher than the pack SOC (i.e., the pack SOC is lower than the target SOC), it is determined that the SOC of the battery pack in a predetermined condition, that is, the SOC is low. Conversely, if the target SOC is lower than the pack SOC as a result of the comparison (i.e., the pack SOC is higher than the target SOC), it is determined that the SOC of the battery pack in a predetermined condition, that is, the SOC is high. If the target SOC is lower than the pack SOC, the pack SOC must be reduced below the target SOC. To this end, the control unit 150 generates a predetermined control signal (i.e., the SOC control signal), supplies the generated predetermined control signal to the SOC adjustment unit 160, and allows the battery 110 to be discharged through the SOC adjustment unit 160 to reduce the pack SOC. In addition, the control unit 150 continues discharging the battery 110 until the pack SOC becomes lower than the target SOC. Meanwhile, the control unit 150 measures the current flowing through the discharge resistor 162 of the SOC adjustment unit 160 by applying the SOC control signal while adjusting the pack SOC by discharging the battery 110 through the SOC adjustment unit 160. The discharge resistor 162 may be made of a variable resistor, and the control unit 150 may compare the current flowing through the discharge resistor 162, that is, the discharge current Ivar and the reference current Ith, and adjust the resistance value of the discharge resistor 162 until the discharge current Ivar is equal to or less than the reference current Ith. Here, the reference current Ith may be set to a value specified by the battery pack manufacturer so that the battery pack temperature does not become too high during discharging. In addition, the resistance value of the discharge resistor may be adjusted in stages based on the difference between the pack SOC and the target SOC. That is, the discharge resistor may be set low in order to adjust the SOC at a faster time.

### 1.6. SOC Adjustment Unit

The SOC adjustment unit 160 may be provided to reduce the SOC of the battery 110 by discharging charged charges of the battery 110. To this end, the SOC adjustment unit 160 is connected to the battery 110 and the control unit 150 to discharge the charge of the battery 110 according to the control signal of the control unit 150, and accordingly, may lower the SOC of the battery 110. The SOC adjustment unit 160 may include a switch 161 connected to the battery 110 and a discharge resistor 162 connected to the switch 161. At this time, the switch 161 and the discharge resistor 162 may be connected in series. The switch 161 may be controlled on/off according to a control signal from the control unit 150. For example, the switch 161 may be turned on in response to a predetermined high level control signal. On the other hand, the switch 161 may be turned off in response to a low level control signal. While the switch 161 is turned on, electrical energy of the battery 110 is consumed by the discharge resistor 162, so that the SOC of the battery pack may gradually decrease. Meanwhile, the discharge resistor 162 may be a variable resistor. Here, the resistance of the discharge resistor 162 may be varied while adjusting the SOC. That is, as measuring the current flowing through the discharge resistor 162, that is, the discharge current Ivar, if the discharge current Ivar is higher than the predetermined reference current Ith, the battery 110 may be discharged by increasing the resistance value of the discharge resistor 162. At this time, the battery 110 is discharged while increasing the resistance value of the discharge resistor 162 until the discharge current Ivar becomes lower than the reference current Ith.

In addition, in order to increase the speed of SOC regulation, the discharge resistor value must be adjusted low in order to set the discharge current Ivar value high, as described above, for the safety of the battery, the discharge current Ivar is adjusted within a range lower than the reference current Ith.

### 2. Remote Managing device

At least one remote managing device 2000 may be provided, for example, one each in a predetermined range of a predetermined location. That is, the remote managing device 2000 may be provided in a communication range, at least one may be provided according to the communication sensitivity between the remote managing device 2000 and the battery pack 1000 and the width of a place where the plurality of battery packs 1000 are located. For example, one remote managing device 2000 may be provided at a predetermined location, or a plurality of remote managing devices 2000 may be provided at predetermined intervals at a predetermined location. The remote managing device 2000 may include a communication unit 210 for communication with the plurality of battery packs 1000 and a management unit 220 for remotely managing the SOC of the battery packs 1000.

### 2.1. Communication Unit

The communication unit 210 may be provided for communication between the battery pack 1000 and the remote managing device 2000. That is, the communication unit 210 of the remote managing device 2000 wirelessly communicates with the communication unit 120 of the battery pack 1000. The communication unit 210 may transmit a control signal, that is, a target SOC signal according to an environment setting value from the management unit 220 to the plurality of battery packs 1000. The communication unit 210 may be a communication module of various types, and for example, a wireless communication module such as Bluetooth or Zigbee may be used.

### 2.2. Management Unit

The management unit 220 may be provided to manage the plurality of battery packs 1000 located in a specific location according to specific circumstances. That is, the management unit 220 may control a plurality of battery packs 1000 located in a predetermined location to have SOCs suitable for predetermined conditions for long-term storage, transportation, or disposal of the battery packs 1000. At this time, the management unit 220 may generate a control signal of an environment setting value according to a predetermined condition. The environment setting value may include a target SOC signal for managing the SOC of the battery pack 1000 according to a predetermined condition or a specific region. That is, the target SOC may be different according to long-term storage, transportation, or disposal of the battery pack 1000, and the management unit 220 may generate a target SOC signal according to a corresponding situation. For example, in the case of long-term storage and transportation, the target SOC may be set to 20% to 30%, and in the case of disposal, the target SOC may be set to 0%. The target SOC according to this predetermined condition may be stored in a predetermined memory unit (not shown), and the management unit 220 may read information data stored in the memory unit and transmits the read information data to the battery pack 1000 through the communication unit 210. In addition, the target SOC may be stored in the memory unit after being adjusted by a managing device according to a predetermined condition. Meanwhile, the management unit 220 may generate a wake-up signal for waking up the plurality of battery packs 1000 located in a predetermined location and transmit the wake-up signal to the plurality of battery packs 1000 through the communication unit 210.

The battery pack 1000 according to an embodiment of the inventive concept configured as described above includes a communication unit 120 to adjust the SOC of the battery pack 1000 according to a control signal from an external device, that is, the remote managing device 2000. That is, in the battery pack management apparatus of the inventive concept, at least one battery pack 1000 is located in a predetermined location according to a predetermined condition, and according to a control signal from the remote managing device 2000, the SOC of the battery pack 1000 is adjusted according to a predetermined condition. To this end, in the battery pack 1000, the communication unit 120 receives a control signal from the remote managing device 2000 and transmits it to the control unit 150, and the control unit 150 compares the SOC of the battery pack estimated by the SOC estimation unit 140 with the target SOC input from the remote managing device 2000 according to the state of the battery 110 measured through the measurement unit 130 to adjust the SOC of the battery pack using the SOC adjustment unit 160. At this time, the control unit 150 compares the target SOC from the remote managing device 2000 with the pack SOC through the SOC estimation unit 140 and when the pack SOC is higher than the target SOC, lowers the pack SOC by discharging the battery 110 using the SOC adjustment unit 160. As a result, when the plurality of battery packs 1000 are located in a predetermined location according to a predetermined condition, the inventive concept wirelessly controls the battery pack 1000 so that the battery pack has an SOC suitable for the predetermined condition under the control of the remote managing device 2000. Therefore, according to the inventive concept, when transporting, storing, or disposing of a battery pack, the battery pack may be automatically controlled in a suitable state through a wireless control signal provided in the environment just by placing the battery pack in a corresponding place. That is, since the plurality of battery packs may be discharged at once without discharging by connecting each battery pack to the system in order to check the SOC of each of the plurality of battery packs, the time for controlling the SOC of the battery packs may be reduced.

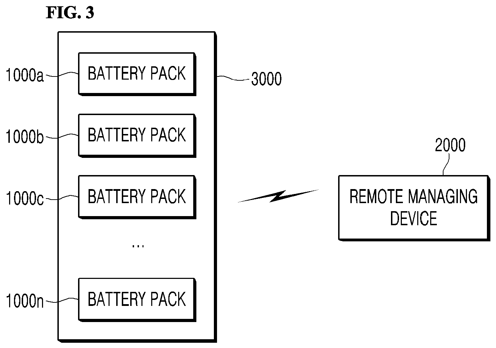

Meanwhile, in the inventive concept, a plurality of battery packs 1000 may be accommodated in a predetermined container and positioned at a specific location. That is, as shown in FIG. 3, a plurality of battery packs 1000 may be accommodated in a battery rack 3000 and accommodated in a predetermined location. Of course, the plurality of battery packs 1000 may be located at a specific location by providing the battery rack 3000 at a specific location and accommodating the plurality of battery packs 1000 in the battery rack 3000. At this time, the battery rack 3000 may communicate with the plurality of battery packs 1000. That is, the battery rack 3000 may be wired or wirelessly connected to each of the plurality of battery packs 1000. To this end, a wired communication terminal or a wireless communication terminal may be provided in the battery rack 3000. In addition, the battery rack 3000 communicatively connected to the plurality of battery packs 1000 may be wirelessly connected to the remote managing device 2000. Accordingly, the target SOC signal according to the environment setting value of the remote managing device 2000 may be supplied to each of the plurality of battery packs 1000 through the battery rack 3000.

Meanwhile, the remote managing device of the inventive concept may include a battery rack (not shown) in which battery packs are mounted, and a battery pack communication connector may be provided in the battery rack so that the battery packs mounted on the battery rack may be connected to the remote managing device through wired communication. In this case, the battery pack described above may be configured to include a wired communication connection unit.

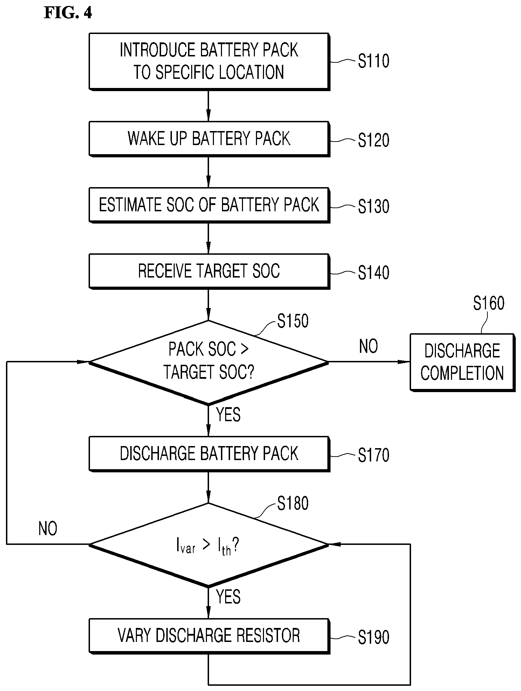

FIG. 4 is a flowchart illustrating a battery pack management method using a battery pack management apparatus according to an embodiment of the inventive concept.

Referring to FIG. 4, a battery pack management method according to an embodiment of the inventive concept may include a process S110 in which a plurality of battery packs 1000 are introduced to a predetermined location according to a predetermined condition, a process S120 in which the plurality of battery packs 1000 wake up by inputting a wake-up signal, a process S130 of estimating the SOC of each of the plurality of battery packs 1000, a process S140 of receiving a target SOC signal from a remote managing device 2000 located in a predetermined location, a process S150 in which each of the plurality of battery packs 1000 compares each pack SOC with a target SOC, a process S160 of notifying the remote managing device 2000 that the battery pack 1000 has been discharged when the pack SOC is lower than the target SOC as a result of the comparison, a process S170 of adjusting the SOC by discharging the battery 110 of the battery pack 1000 when the pack SOC is higher than the target SOC as a result of the comparison, a process S180 of measuring the discharge current Ivar and comparing the measured discharge current Ivar with the reference current Ith while adjusting the SOC of the battery, and a variable resistance adjusting process S190 of lowering the value of the discharge current Ivar by increasing the resistance value of the discharge resistor when the discharge current Ivar is higher than the reference current Ith. The battery pack management method according to an embodiment of the inventive concept will be described in detail for each process as follows.

S110 : The plurality of battery packs 1000 are introduced and located in a predetermined location according to specific circumstances such as long-term storage, transportation, and disposal. For example, a plurality of battery packs 1000 may be located in a predetermined place (for example, a storage warehouse) for long-term storage, may be located in a predetermined space (for example, a container) for transportation, and may be located in a predetermined space (for example, a storage yard or warehouse) for disposal. In this case, each of the plurality of battery packs 1000 may be capable of wireless communication. In addition, the remote managing device 2000 may be provided in a predetermined location according to a predetermined condition and control a plurality of battery packs 1000 located in the corresponding situation or place. At this time, the remote managing device 2000 may remotely control the plurality of battery packs 1000 through wireless communication. That is, the remote managing device 2000 may wirelessly control the plurality of battery packs 1000 located in a storage warehouse for long-term storage, accommodated in a container for transportation, or stored in an open yard for disposal. Meanwhile, the battery pack 1000 is mounted on an electric/electronic device during normal operation to provide electrical energy to the electric/electronic device. Therefore, in the inventive concept, even before or after the battery pack 1000 is mounted on the electric/electronic device, it is separated from the electric/electronic device and introduced into a predetermined location under a predetermined condition.

S120 : When a plurality of battery packs 1000 flow into a predetermined location where the remote managing device 2000 is installed, the management unit 220 of the emote managing device 2000 generates a wake-up signal and transmits the generated wake-up signal to the plurality of battery packs 1000 through the communication unit 210. The plurality of battery packs 1000 are woken up by inputting a wake-up signal from the remote managing device 2000. That is, each communication unit 120 of the plurality of battery packs 1000 receives a wake-up signal from the communication unit 210 of the remote managing device 2000 and transmits the received wake-up signal to the control unit 150, and the control unit 150 wakes up the battery pack 1000 by inputting a wakeup signal. According to the wake-up signal, the control unit 150 wakes up the battery pack 1000 by driving the battery 110 or driving a predetermined power supply unit (not shown) provided inside the battery pack 1000, and the battery pack 1000 is woken up by supplying power to components that is, the measurement unit 130, the SOC estimation unit 140, the control unit 150, constituting the battery pack 1000 from the battery 110 or a predetermined power supply unit. Of course, the wake-up signal may be applied to the battery 110 or a predetermined power supply unit without passing through the control unit 150, and accordingly, the battery pack 1000 may be woken up by supplying power to components of the battery pack 1000 from the battery 110 or a predetermined power supply unit. Meanwhile, the wake-up signal may be input at predetermined cycles. That is, a wake-up signal may be input from the remote managing device 2000 at a predetermined period to wake up the battery pack 1000 at a predetermined period.

S130 : After the battery pack 1000 wakes up, the SOC of the battery pack 1000, that is, the pack SOC is estimated, and the estimated initial SOC is transmitted to the remote managing device 2000 through the communication unit 120. There may be various methods for estimating SOC. As a first method, the SOC of the battery 110 may be estimated using the capacity of the battery 110 estimated from the SOH estimation unit (not shown) and the current of the battery 110 measured and averaged from the measurement unit 130. That is, the SOC estimation unit 140 may estimate the SOC of the battery 110 by integrating the calculated average current value for a predetermined time and dividing it by the battery capacity estimated from the SOH estimation unit. As a second method, the SOC estimation unit 140 may estimate the SOC using the open circuit voltage (OCV) of the battery 110. That is, the SOC may be estimated by extracting the SOC matched with the OCV measured by the measurement unit 130 by referring to the initial OCV table. In this case, the SOC may be estimated by estimating the initial SOC estimated by OCV and measuring the discharge current. The pack SOC may be estimated using various other methods.

S140 : After transmitting the initial SOC of the battery pack 1000, the battery pack 1000 may receive a target SOC signal from the remote management device 2000. That is, the target SOC signal generated from the management unit 220 of the remote management device 2000 is transmitted to the communication unit 120 of the battery pack 1000 through the communication unit 210, and the communication unit 120 may receive and transmit the target SOC signal to the control unit 150. Here, the management unit 220 of the remote management device 2000 may generate a target SOC signal for managing the SOC of a plurality of battery packs 1000 located in a predetermined location for long-term storage, transportation, or disposal of the battery pack 1000. That is, the target SOC may be different according to long-term storage, transportation, or disposal of the battery pack 1000, and the management unit 220 may generate a target SOC signal according to a corresponding situation. For example, in the case of long-term storage and transportation, the target SOC may be set to 20% to 30%, and in the case of disposal, the target SOC may be set to 0%.

The management unit 220 of the remote management unit 2000 may transmit an external discharge signal to the battery by comparing the difference between the received initial SOC of the battery pack 1000 and the target SOC. At this time, a first discharge rate designation signal for designating a discharge rate according to a difference between the initial SOC and the target SOC may be transmitted to the battery together with an external discharge signal or alone.

S150 : The plurality of battery packs 1000 compare the pack SOC and the target SOC. That is, the control unit 150 receives the pack SOC estimated from the SOC estimation unit 140 and the target SOC from the remote management unit 2000 through the communication unit 120 and compares them. For example, the control unit 150 compares and determines whether the pack SOC is greater than the target SOC.

S160 : The pack SOC is compared with the target SOC, and if the pack SOC is smaller than the target SOC, it transmits to the remote managing device 2000 that the battery pack 1000 has an SOC suitable for a predetermined condition. That is, when the pack SOC is smaller than the target SOC, a predetermined signal is transmitted to the remote managing device 2000 indicating that the battery 110 is discharged below a predetermined level.

S170 : However, if the pack SOC is greater than the target SOC, the control unit 150 generates an SOC control signal and applies the generated SOC control signal to the SOC adjustment unit 160. The SOC adjustment unit 160 discharges the battery 110 by inputting the SOC control signal. That is, in the SOC adjustment unit 160 including the switch 161 and the discharge resistor 162, the switch 161 is turned on according to the SOC control signal from the control unit 150, so that charges charged in the battery 110 are discharged through the discharge resistor 162. By discharging the battery 110 using the SOC adjustment unit 160, the pack SOC is adjusted. Adjustment of the pack SOC is performed until the pack SOC becomes lower than the target SOC.

At this time, the control unit 150 receives a first discharge rate designation signal and transmits the received first discharge rate designation signal to the SOC adjustment unit 160, or compares the pack SOC and the target SOC to generate a second discharge rate designation signal based on the difference and transmit the generated second discharge rate designation signal to the SOC adjustment unit 160.

When there is a first or second discharge rate designation signal, the value of the discharge resistor 162 described later may be adjusted according to a designated discharge rate. If wanting to increase the discharge rate, it is possible to increase the discharge current by lowering the resistance value of the discharge resistor. However, even when the resistance value of the discharge resistor 162 is lowered to increase the discharge rate, as described in step S190 below, when the discharge current Ivar is higher than the reference current Ith, the resistance value of the discharge resistor is increased.

S180 : The control unit 150 measures the current flowing through the discharge resistor 162 of the SOC adjustment unit 160 by applying the SOC control signal while adjusting the pack SOC by discharging the battery 110 through the SOC adjustment unit 160. The discharge resistor 162 may be formed of a variable resistor, and the control unit 150 compares the current flowing through the discharge resistor 162, that is, the discharge current Ivar and the reference current Ith.

S190 : When the discharge current Ivar flowing through the discharge resistor is compared with a predetermined reference current Ith and the discharge current Ivar is higher than the reference current Ith, the resistance value of the discharge resistor 162 may be increased. Here, the reference current Ith may be a safe current value set so that the temperature of the battery pack does not become too high during discharging with a value specified by the battery pack manufacturer, and is a safe current value for battery discharge.

As described above, although the technical idea of the inventive concept has been specifically described according to the above embodiment, it should be noted that the above embodiments are for the purpose of explanation and not limitation.

The symbols and their names used in the drawings of the present invention are as follows.

| | | | |
|---|---|---|---|
| 1000 : | battery pack | 2000 : | remote managing device |
| 3000 : | battery rack | 110 : | battery |
| 120 : | communication unit | 130 : | measurement unit |
| 140 ; | SOC estimation unit | 150 : | control unit |
| 160 : | SOC adjustment unit | 210 : | communication unit |
| 220 : | management unit | | |

## Claims

1. A battery pack (1000, 1000a-n) comprising:
a battery (110) including a plurality of chargeable and dischargeable battery (110) cells;
a communication unit (120) configured to transmit an initial state of charge, SOC, of the battery (110) to an external device;
an SOC estimation unit (140) configured to estimate an SOC of the battery (110);
**characterized in that**
the communication unit (120) is configured to receive a target SOC from the external device; and
**characterized in that** the battery pack (1000, 1000a-n) further comprises:
a control unit (150) configured to output an SOC adjustment signal for adjusting an SOC of a battery (110) according to the target SOC; and
an SOC adjustment unit (160) configure to adjust the SOC of the battery (110) according to the SOC adjustment signal.

2. The battery pack (1000, 1000a-n) of claim 1, wherein when the battery pack (1000, 1000a-n) is introduced into a predetermined location, including at least one of a storage warehouse, a container, or a storage yard, depending on a predetermined condition of the battery pack (1000, 1000a-n), wherein the predetermined condition is any one of long-term storage, transportation or disposal, the communication unit (120) of the battery pack (1000, 1000a-n) is configured to receive a wake-up signal from the external device to wake up the battery pack (1000, 1000a-n), wherein the external device is a remote managing device (2000) for managing the battery pack (1000, 1000a-n).

3. The battery pack (1000, 1000a-n) of claim 2, wherein the wake-up signal is received from the remote managing device (2000) at a predetermined cycle.

4. The battery pack (1000, 1000a-n) of one of claims 2 to 3, wherein the target SOC received from the remote managing device (2000) is based on the operation status of the (1000, 1000a-n), including long-term storage, transportation, or disposal of the battery pack (1000, 1000a-n).

5. The battery pack (1000, 1000a-n) of claim 4, wherein the control unit (150) is configured to compare the SOC estimated by the SOC estimation unit (140) and the target SOC of the battery (110), in order to output the SOC adjustment signal.

6. The battery pack (1000, 1000a-n) of claim 5, wherein the SOC adjustment unit (160) comprises a switch (161) connected to the battery (110) and a discharge resistor (162) connected to the switch (161),
wherein the switch (161) is driven according to the SOC adjustment signal to allow the battery (110) to be discharged through the discharge resistor (162) so that the SOC of the battery (110) becomes lower than the target SOC.

7. The battery pack (1000, 1000a-n) of claim 6, wherein the discharge resistor (162) comprises a variable resistance, and the control unit (150) is configured to adjust the resistance of the discharge resistor (162) to control a temperature of the battery pack (1000, 1000a-n).

8. A battery pack management apparatus comprising:
at least one battery pack (1000, 1000a-n) according to one of claims 1 to 7; and
a remote managing device (2000) external from the at least one battery pack (1000, 1000a-n) and configured to manage the at least one battery pack (1000, 1000a-n) using communication,
wherein the remote managing device (2000) is configured to set a target SOC to transmit the set target SOC to the battery pack (1000, 1000a-n), and the battery pack (1000, 1000a-n) is configured to adjust a pack SOC according to the target SOC.

9. The battery pack management apparatus of claim 8, wherein the remote managing device (2000) comprises:
a second communication unit (210) configured to transmit a wake-up signal and a target SOC to the battery pack (1000, 1000a-n) and to receive an initial SOC from the battery pack (1000, 1000a-n); and
a management unit (220) configured to generate the wake-up signal and the target SOC and manage the battery pack (1000, 1000a-n) through the second communication unit (210).

10. The battery pack management apparatus of claim 8 or 9, further comprising a battery rack (3000) configured to accommodate at least one battery pack (1000, 1000a-n) and communicate with the at least one battery pack (1000, 1000a-n) through wireless communication or wired communication.

11. The battery pack management apparatus of claim 10, wherein the remote management device (2000) is configured to manage the at least one battery pack (1000, 1000a-n) accommodated in the battery rack (3000).

12. A battery pack management method comprising:
introducing (S110) at least one battery pack (1000, 1000a-n) to a predetermined location, including at least one of a storage warehouse, a container, or a storage yard, depending on a predetermined condition of the battery pack (1000, 1000a-n), wherein the predetermined condition is any one of long-term storage, transportation or disposal;
waking up (S120) the battery pack (1000, 1000a-n) by inputting a wake-up signal into the battery pack (1000, 1000a-n);
estimating (S130) a pack SOC of the battery pack (1000, 1000a-n);
receiving (S140) a target SOC for the battery pack (1000, 1000a-n) from a remote managing device (2000);
comparing (S150) the pack SOC of the battery pack (1000, 1000a-n) and the target SOC for the battery pack (1000, 1000a-n);
transmitting (S160) a signal to a remote managing device (2000) indicating that the battery pack (1000, 1000a-n) discharging is completed if the pack SOC is lower than the target SOC based on a comparison result; and
adjusting the pack SOC by discharging the battery pack (1000, 1000a-n) through a discharge resistor (162), if the pack SOC is higher than the target SOC based on the comparison result.

13. The battery pack management method of claim 12, further comprising:
measuring (S180) a discharge current while adjusting the pack SOC and comparing the measured discharge current of the battery pack (1000, 1000a-n) with a reference current; and
adjusting (S190) the pack SOC comprises increasing the resistance value of the discharge resistor (162), if the discharge current is higher than the reference current.

## Patentansprüche

1. Batteriepack (1000, 1000a-n), umfassend:
eine Batterie (110), die eine Vielzahl von aufladbaren und entladbaren Batteriezellen (110) beinhaltet;
eine Kommunikationseinheit (120), die konfiguriert ist, um einen anfänglichen Ladezustand, SOC, der Batterie (110) an eine externe Vorrichtung zu übertragen;
eine SOC-Schätzeinheit (140), die konfiguriert ist, um einen SOC der Batterie (110) zu schätzen;
**dadurch gekennzeichnet, dass**
die Kommunikationseinheit (120) konfiguriert ist, um einen Soll-SOC von der externen Vorrichtung zu empfangen; und
**dadurch gekennzeichnet, dass** das Batteriepack (1000, 1000a-n) ferner umfasst:
eine Steuereinheit (150), die konfiguriert ist, um ein SOC-Einstellsignal zum Einstellen eines SOC einer Batterie (110) gemäß dem Soll-SOC auszugeben; und
eine SOC-Einstelleinheit (160), die konfiguriert ist, um den SOC der Batterie (110) gemäß dem SOC-Einstellsignal einzustellen.

2. Batteriepack (1000, 1000a-n) nach Anspruch 1, wobei, wenn das Batteriepack (1000, 1000a-n) in Abhängigkeit von einem vorbestimmten Zustand des Batteriepacks (1000, 1000a-n) an einen vorbestimmten Ort, einschließlich mindestens eines Lagerlagers, eines Containers oder eines Lagerhofs, zugeführt wird, wobei der vorbestimmte Zustand eines von Langzeitlagerung, Transport oder Entsorgung ist, die Kommunikationseinheit (120) des Batteriepacks (1000, 1000a-n) konfiguriert ist, um ein Aufwecksignal von der externen Vorrichtung zu empfangen, um das Batteriepack (1000, 1000a-n) aufzuwecken, wobei die externe Vorrichtung eine Fernverwaltungsvorrichtung (2000) zum Verwalten des Batteriepacks (1000, 1000a-n) ist.

3. Batteriepack (1000, 1000a-n) nach Anspruch 2, wobei das Aufwecksignal von der Fernverwaltungsvorrichtung (2000) in einem vorbestimmten Zyklus empfangen wird.

4. Batteriepack (1000, 1000a-n) nach einem der Ansprüche 2 bis 3, wobei der von der Fernverwaltungsvorrichtung (2000) empfangene Soll-SOC auf dem Betriebsstatus des Batteriepacks (1000, 1000a-n), einschließlich Langzeitlagerung, Transport oder Entsorgung des Batteriepacks (1000, 1000a-n), basiert.

5. Batteriepack (1000, 1000a-n) nach Anspruch 4, wobei die Steuereinheit (150) konfiguriert ist, um den von der SOC-Schätzeinheit (140) geschätzten SOC und den Soll-SOC der Batterie (110) zu vergleichen, um das SOC-Einstellsignal auszugeben.

6. Batteriepack (1000, 1000a-n) nach Anspruch 5, wobei die SOC-Einstelleinheit (160) einen mit der Batterie (110) verbundenen Schalter (161) und einen mit dem Schalter (161) verbundenen Entladewiderstand (162) umfasst,
wobei der Schalter (161) gemäß dem SOC-Einstellsignal angesteuert wird, um zu ermöglichen, dass die Batterie (110) durch den Entladewiderstand (162) entladen wird, sodass der SOC der Batterie (110) niedriger als der Soll-SOC wird.

7. Batteriepack (1000, 1000a-n) nach Anspruch 6, wobei der Entladewiderstand (162) einen variablen Widerstand umfasst und die Steuereinheit (150) konfiguriert ist, um den Widerstand des Entladewiderstands (162) einzustellen, um eine Temperatur des Batteriepacks (1000, 1000a-n) zu steuern.

8. Batteriepack-Verwaltungsvorrichtung, umfassend:
mindestens ein Batteriepack (1000, 1000a-n) nach einem der Ansprüche 1 bis 7; und
eine Fernverwaltungsvorrichtung (2000) außerhalb des mindestens einen Batteriepacks (1000, 1000a-n) und konfiguriert, um das mindestens eine Batteriepack (1000, 1000a-n) unter Verwendung von Kommunikation zu verwalten,
wobei die Fernverwaltungsvorrichtung (2000) konfiguriert ist, um einen Soll-SOC einzustellen, um den eingestellten Soll-SOC an das Batteriepack (1000, 1000a-n) zu übertragen, und das Batteriepack (1000, 1000a-n) konfiguriert ist, um einen Pack-SOC gemäß dem Soll-SOC einzustellen.

9. Batteriepack-Verwaltungsvorrichtung nach Anspruch 8, wobei die Fernverwaltungsvorrichtung (2000) umfasst:
eine zweite Kommunikationseinheit (210), die konfiguriert ist, um ein Aufwecksignal und einen Soll-SOC an das Batteriepack (1000, 1000a-n) zu übertragen und einen anfänglichen SOC von dem Batteriepack (1000, 1000a-n) zu empfangen; und
eine Verwaltungseinheit (220), die konfiguriert ist, um das Aufwecksignal und den Soll-SOC zu erzeugen und das Batteriepack (1000, 1000a-n) durch die zweite Kommunikationseinheit (210) zu verwalten.

10. Batteriepack-Verwaltungsvorrichtung nach Anspruch 8 oder 9, ferner umfassend ein Batteriegestell (3000), das konfiguriert ist, um mindestens ein Batteriepack (1000, 1000a-n) aufzunehmen und mit dem mindestens einen Batteriepack (1000, 1000a-n) durch drahtlose Kommunikation oder drahtgebundene Kommunikation zu kommunizieren.

11. Batteriepack-Verwaltungsvorrichtung nach Anspruch 10, wobei die Fernverwaltungsvorrichtung (2000) konfiguriert ist, um das mindestens eine Batteriepack (1000, 1000a-n), das in dem Batteriegestell (3000) aufgenommen ist, zu verwalten.

12. Batteriepack-Verwaltungsverfahren, umfassend:
Zuführen (S110) mindestens eines Batteriepacks (1000, 1000a-n) an einen vorbestimmten Ort, einschließlich mindestens eines von einem Lagerlager, einem Container oder einem Lagerhof, in Abhängigkeit von einem vorbestimmten Zustand des Batteriepacks (1000, 1000a-n), wobei der vorbestimmte Zustand eines von Langzeitlagerung, Transport oder Entsorgung ist;
Aufwecken (S120) des Batteriepacks (1000, 1000a-n) durch Eingeben eines Aufwecksignals in das Batteriepack (1000, 1000a-n);
Schätzen (S130) eines Pack-SOC des Batteriepacks (1000, 1000a-n);
Empfangen (S140) eines Soll-SOC für das Batteriepack (1000, 1000a-n) von einer Fernverwaltungsvorrichtung (2000);
Vergleichen (S150) des Pack-SOC des Batteriepacks (1000, 1000a-n) und des Soll-SOC für das Batteriepack (1000, 1000a-n);
Übertragen (S160) eines Signals an eine Fernverwaltungsvorrichtung (2000), das anzeigt, dass das Entladen des Batteriepacks (1000, 1000a-n) abgeschlossen ist, wenn der Pack-SOC niedriger als der Soll-SOC ist, basierend auf einem Vergleichsergebnis; und
Einstellen des Pack-SOC durch Entladen des Batteriepacks (1000, 1000a-n) durch einen Entladewiderstand (162), wenn der Pack-SOC höher als der Soll-SOC ist, basierend auf dem Vergleichsergebnis.

13. Batteriepack-Verwaltungsverfahren nach Anspruch 12, ferner umfassend:
Messen (S180) eines Entladestroms während des Einstellens des Pack-SOC und Vergleichen des gemessenen Entladestroms des Batteriepacks (1000, 1000a-n) mit einem Referenzstrom; und
wobei das Einstellen (S190) des Pack-SOC das Erhöhen des Widerstandswerts des Entladewiderstands (162) umfasst, wenn der Entladestrom höher als der Referenzstrom ist.

## Revendications

1. Bloc-batterie (1000, 1000a-n) comprenant :
une batterie (110) comprenant une pluralité de cellules de batterie rechargeables et déchargeables (110) ;
un module de communication (120) configuré pour transmettre un état de charge (SOC) initial de la batterie (110) à un dispositif externe ;
un module d'estimation du SOC (140) configuré pour estimer un SOC de la batterie (110) ;
**caractérisé en ce que**
le module de communication (120) étant configuré pour recevoir, du dispositif externe, un SOC cible ; et
**caractérisé en ce que** le bloc-batterie (1000, 1000a-n) comprend en outre :
un module de commande (150) configuré pour émettre un signal d'ajustement du SOC pour ajuster un SOC d'une batterie (110) en fonction du SOC cible ; et
un dispositif d'ajustement du SOC (160) configuré pour ajuster le SOC de la batterie (110) en fonction du signal d'ajustement du SOC.

2. Bloc-batterie (1000, 1000a-n) selon la revendication 1, dans lequel, lorsque le bloc-batterie (1000, 1000a-n) est introduit dans un lieu prédéterminé, y compris au moins un entrepôt, un conteneur, ou une aire d'entreposage, en fonction d'un état prédéterminé du bloc-batterie (1000, 1000a-n), l'état prédéterminé étant un quelconque des suivants : entreposage de longue durée, transport, ou mise au rebut, le module de communication (120) du bloc-batterie (1000, 1000a-n) étant configuré pour recevoir, du dispositif externe, un signal de réveil pour réveiller le bloc-batterie (1000, 1000a-n), le dispositif externe étant un dispositif de gestion distant (2000) assurant la gestion du bloc-batterie (1000, 1000a-n).

3. Bloc-batterie (1000, 1000a-n) selon la revendication 2, le signal de réveil étant reçu du dispositif de gestion distant (2000) à un cycle prédéterminé.

4. Bloc-batterie (1000, 1000a-n) selon une des revendications 2 à 3, le SOC cible reçu du dispositif de gestion distant (2000) étant basé sur l'état fonctionnel du (1000, 1000a-n), y compris l'entreposage de longue durée, le transport, ou la mise au rebut du bloc-batterie (1000, 1000a-n).

5. Bloc-batterie (1000, 1000a-n) selon la revendication 4, le module de commande (150) étant configuré pour comparer le SOC estimé par le module d'estimation du SOC (140) et le SOC cible de la batterie (110), afin d'émettre le signal d'ajustement du SOC.

6. Bloc-batterie (1000, 1000a-n) selon la revendication 5, le dispositif d'ajustement du SOC (160) comprenant un commutateur (161) connecté à la batterie (110) et une résistance de décharge (162) connectée au commutateur (161),
le commutateur (161) étant commandé en fonction du signal d'ajustement du SOC afin de permettre à la batterie (110) de se décharger à travers la résistance de décharge (162) afin que le SOC de la batterie (110) devienne inférieur au SOC cible.

7. Bloc-batterie (1000, 1000a-n) selon la revendication 6, la résistance de décharge (162) comprenant une résistance variable, et le module de commande (150) étant configuré pour ajuster la résistance de la résistance de décharge (162) afin de commander une température du bloc-batterie (1000, 1000a-n).

8. Appareil de gestion du bloc-batterie comprenant :
au moins un bloc-batterie (1000, 1000a-n) selon une quelconque des revendications 1 à 7; et
une télécommande (2000) externe à l'au moins un bloc-batterie (1000, 1000a-n), et configuré pour gérer l'au moins un bloc-batterie (1000, 1000a-n) par des communications,
la télécommande (2000) étant configurée pour établir un SOC cible pour transmettre le SOC cible établi au bloc-batterie (1000, 1000a-n), et le bloc-batterie (1000, 1000a-n) étant configuré pour ajuster un SOC de bloc en fonction du SOC cible.

9. Appareil de gestion du bloc-batterie selon la revendication 8, la télécommande (2000) comprenant :
un deuxième module de communication unit (210) configuré pour transmettre un signal de réveil et un SOC cible au bloc-batterie (1000, 1000a-n) et pour recevoir un SOC initial du bloc-batterie (1000, 1000a-n) ; et
un dispositif de gestion (220) configuré pour générer le signal de réveil et le SOC cible, et gérer le bloc-batterie (1000, 1000a-n) à travers le deuxième module de communication unit (210).

10. Appareil de gestion du bloc-batterie selon la revendication 8 ou 9, comprenant en outre un bâti de batterie (3000) configuré pour accueillir au moins un bloc-batterie (1000, 1000a-n) et communiquer avec l'au moins un bloc-batterie (1000, 1000a-n) par des communications sans fil ou filaires.

11. Appareil de gestion du bloc-batterie selon la revendication 10, la télécommande (2000) étant configurée pour gérer l'au moins un bloc-batterie (1000, 1000a-n) installé dans le bâti de batterie (3000).

12. Procédé de gestion de bloc-batterie comprenant :
l'introduction (S110) d'au moins un bloc-batterie (1000, 1000a-n) dans un lieu prédéterminé, y compris au moins un entrepôt, un conteneur, ou une aire d'entreposage, en fonction d'un état prédéterminé du bloc-batterie (1000, 1000a-n), l'état prédéterminé étant un quelconque des suivants : entreposage de longue durée, transport, ou mise au rebut ;
le réveil (S120) du bloc-batterie (1000, 1000a-n) en introduisant un signal de réveil dans le bloc-batterie (1000, 1000a-n) ;
l'estimation (S130) d'un SOC de bloc du bloc-batterie (1000, 1000a-n) ;
la réception (S140), d'une télécommande (2000), d'un SOC cible pour le bloc-batterie (1000, 1000a-n) ;
la comparaison (S150) du SOC de bloc du bloc-batterie (1000, 1000a-n) avec le SOC cible pour le bloc-batterie (1000, 1000a-n) ;
la transmission (S160) d'un signal à une télécommande (2000) indiquant que la décharge du bloc-batterie (1000, 1000a-n) est terminée si le SOC du bloc est inférieur à un SOC cible d'après le résultat d'une comparaison ; et
l'ajustement du SOC du bloc en déchargeant le bloc-batterie (1000, 1000a-n) à travers une résistance de décharge (162), si le SOC du bloc est supérieur au SOC cible d'après le résultat de la comparaison.

13. Procédé de gestion de bloc-batterie selon la revendication 12, comprenant en outre :
la mesure (S180) d'un courant de décharge tout en ajustant le SOC du bloc et en comparant le courant de décharge mesuré du bloc-batterie (1000, 1000a-n) avec un courant de référence ; et
l'ajustement (S190) du SOC du bloc comprenant l'augmentation de la valeur de résistance de la résistance de décharge (162), si le courant de décharge est supérieur au courant de référence.
